Europäisches Patentamt

(19) European Patent Office

Office européen des brevets

(11) Publication number: **0 340 351 B1**

(12) **EUROPEAN PATENT SPECIFICATION**

(45) Date of publication of patent specification:
08.01.92 Bulletin 92/02

(21) Application number: **88303968.7**

(22) Date of filing: **03.05.88**

(51) Int. Cl.⁵: **F23C 11/02, F02C 3/26**

(54) **Method for generating the gas driving a gas turbine.**

(43) Date of publication of application:
08.11.89 Bulletin 89/45

(45) Publication of the grant of the patent:
08.01.92 Bulletin 92/02

(84) Designated Contracting States:
**DE ES FR GB IT NL**

(56) References cited:
**EP-A- 0 046 406**
**CH-A- 246 788**
**CH-A- 268 650**
**US-A- 2 225 311**
**US-A- 2 465 464**
**US-A- 3 139 726**
**US-A- 4 597 774**

(73) Proprietor: **FOSTER WHEELER ENERGY
CORPORATION
Law Department Perryville Corporate Park
Clinton New Jersey 08809-4000 (US)**

(72) Inventor: **Garcia-Mallol, Juan Antonio
11 Ellsworth Avenue
Morristown New Jersey, 07960 (US)**
Inventor: **Alliston, Michael Gerard
24 Field Lane
Denville New Jersey, 07834 (US)**

(74) Representative: **Hitchcock, Esmond Antony et
al
Lloyd Wise, Tregear & Co. Norman House
105-109 Strand
London WC2R 0AE (GB)**

Jouve, 18, rue Saint-Denis, 75001 PARIS

## Description

This invention relates to a method of operating a gas turbine assembly, and more particularly, to such a method utilizing a combined fluidized bed boiler and gasifier for generating gases to drive the turbine.

Combustion systems utilizing fluidized beds as the primary source of heat generation are well known. In these arrangements, air is passed through a bed of particulate material, including a fossil fuel such as coal and an adsorbent for the sulphur generated by the combustion of the coal, to fluidize the bed and promote the combustion of the fuel at relatively low temperatures ; see, for example, US-A-4597774. When the combustor is pressurized, the hot gases produced by the fluidized bed can be used to drive a turbine for the generation of electrical power.

One of the characteristics of a fluidized bed combustion bed process is a relatively low gas temperature which is necessary in order to keep the pollutant emissions low. However, this results in a compromise in the combined boiler-turbine cycle efficiency since the turbine can be operated with gas temperatures well in excess of the maximum permitted in a fluidized bed boiler. Hence, in order to increase the temperature of the gas entering the turbine to improve the cycle efficiency, it has been proposed to gasify a slip stream of the fuel feed in a separate vessel. This fuel gas stream is then combined with the flue gases from the boiler in a burner to raise the temperature of the latter gases to acceptable levels. However, this requirement of an additional gasifier considerably adds to the cost of the process and is thus undesirable.

A primary aim of the present invention is to provide a method of generating gases for driving a turbine which eliminates the cost of a separate gasifier. The method comprises the steps of passing air through a bed of particulate material including fuel disposed in a vessel, the velocity of the air being sufficient to fluidize the particulate material and promote the combustion fuel in the bed, but insufficient for complete combustion of the fuel whereby a combustible off-gas is generated containing entrained particulate material from the bed ; and adding additional air to the vessel at a location above the fluidized bed to complete combustion of the fuel and generate a flue gas with entrained particulate material which is discharged through an outlet from the vessel. According to the invention, a portion of the off-gas is discharged through an outlet from the vessel located upstream of the location where said additional air is added, entrained particulate material is separated from the flue gases and from the off-gas, and the flue gases and at least some of the off-gas are then burnt together to generate high temperature gases which are passed to the turbine assembly.

A fluidized bed boiler operating in accordance with the invention has a gasifier section which generates gases that are partially combusted, and extracts a portion of them so that, when recombined with the flue gases from the boiler in a burner, the gases attain an elevated temperature consistent with the optimum operation of the gas turbine. Systems embodying the invention, and comprising such a boiler, will now be described by way of example and with reference to the accompanying drawings wherein :

Figure 1 is a schematic view showing the components of a system operating in accordance with the method of the invention ; and

Figure 2 is a view similar to Figure 1 but showing an alternative system embodying the invention.

Referring specifically to the drawings, the reference numeral 10 refers to a fluidized bed boiler which contains a bed 12 of particulate material including fuel and a sorbent for absorbing the sulphur generated by the combustion of the fuel. A conduit 14 introduces air into the lower portion of the boiler 10 and the air passes through a perforated grate 16 and is thus evenly distributed through the bed 12 to fluidize the material. An air compressor 15 operates in a conventional manner to supply pressurized air to the conduit 14. The quantity of the air is insufficient for complete combustion of the fuel but sufficient to generate a combustible off-gas. A branch conduit 14a extends from the conduit 14 and introduces air at a point above the fluidized bed 12 which is sufficient to complete the combustion of the fuel. Although not shown in the drawings it is understood that one or more feeders, or the like, are provided to introduce additional fuel and adsorbent material into the bed as needed and also provided are one or more extraction units so that solid products do not accummulate in the bed.

The gases not combusting in the bed combine with the gaseous products of combustion and with the air introduced via the conduit 14a to form a flue gas that passes through the length of the boiler before exiting from an outlet on the boiler 10 and into a conduit 18 which is connected to the inlet of a cyclone separator 20. An outlet conduit 22 is disposed between the air distribution grid plate 16 and the point of introduction of the additional air from the conduit 14a and receives the combustible off-gas from an outlet of the boiler 10 and discharges it into a second cyclone separator 24.

The solid particulate separated from the gases in the separators 20 and 24 are discharged from their lower portions thereof into a conduit 26 which re-injects the particulate material through a suitable inlet of the boiler 10 and back into the bed 12. The separated gas from the separators 20 and 24 pass, via conduits 28 and 30, respectively, into two clean-up units 34 and 36, respectively, for effecting an additional separation of any impurities or solid particles from the gases.

Two conduits 38 and 40 respectively connect the clean-up units 34 and 36 to a burner assembly 42 which functions in a conventional manner to ignite the gases in the presence of excess air in conduit 38 and therefore produces a product gas which is fed, via a conduit 44, to a gas turbine 46.

The gas turbine 46 drives an electrical generator 48 in a conventional manner, and the gas outlet of the turbine is connected, via a conduit 50, to a waste heat boiler 52. Feedwater enters the upper portion of the waste heat boiler 52 via a conduit 54 and traverses the length of the boiler and is thus heated before passing, via a conduit 56, to the fluidized bed boiler 10 and a superheater 58 disposed in the fluidized bed boiler 10. The superheated steam from the superheater 58 is directed, via a conduit 60, to other equipment for further use.

In operation, air from the compressor 15 is passed, via the conduit 14, into the fluidized bed 12 in the boiler 10 at a velocity sufficient to fluidize the bed 12 and promote the combustion of a particulate fuel material in the bed. The gases not combusting in the bed combine with the gaseous products of combustion and with the air introduced via the conduit 14a to form a flue gas that passes through the length of the boiler before exiting from an outlet on the boiler and into the conduit 18. During this passage, the flue gas entrains the relatively fine particulate material in the bed and is passed into the separator 20. The air introduced into the lower portion of the bed 12 in the manner just described is carefully controlled so that it is insufficient to completely combust the fuel in the bed but sufficient to generate a combustible off-gas. The branch conduit 14a introduces additional air into an area of the boiler 10 above the bed 12 in sufficient quantities to complete the combustion.

The conduit 22 receives the off-gas at a point upstream of the introduction of the additional air from the conduit 14a and this off-gas passes into the separator 24.

The gases in the separators 20 and 24 are separated from their entrained particulate material and the latter is reinjected, via the conduit 26, back into the bed 12. The relatively clean gases from the separators 20 and 24 pass, via the conduits 28 and 30, into the clean-up units 34 and 36, respectively, for further clean-up, and the relatively pure gases then pass, via the conduits 38 and 40, into the burner assembly 42. At the burner assembly 42, combustion of the combustible off-gas is achieved in the presence of the flue gas and excess air in the conduit 38 to raise the temperature of the gases before they pass, via the conduit 44, into the gas turbine 46.

The spent gases from the turbine pass, via the conduit 50, into the waste heat boiler, and exchange heat with feedwater passing through the boiler from the conduit 54. The relatively hot feedwater from the boiler 52 passes, via the conduit 56, into the fluidized bed boiler 10 where it is converted to steam by passing through the superheater 58. The superheated steam is then passed, via the conduit 60, to external equipment.

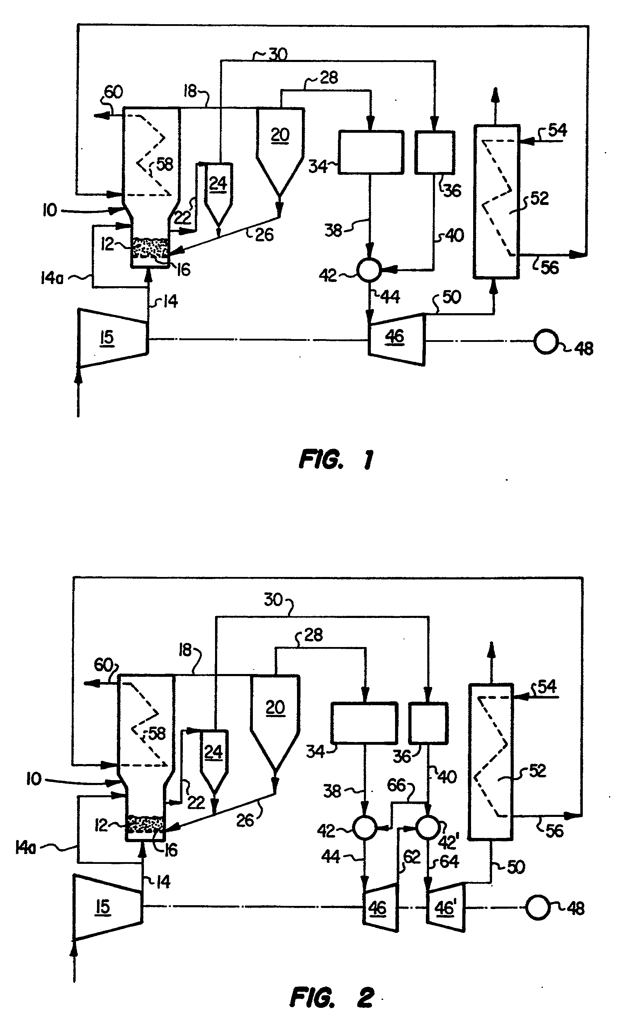

Since the embodiment of Fig. 2 is similar to that of Fig. 1 and utilizes the same components as in the embodiment of Fig. 1 these components will be given the same reference numerals. According to the embodiment of Fig. 2 a second-state turbine 46' is provided in series relationship with the first-stage turbine 46, and two burners 42 and 42' are provided and are connected, via the conduits 38 and 40, to the clean-up units 34 and 36, respectively. A conduit 62 connects the gas outlet of the first-stage turbine 46 to the burner 42' and a conduit 64 connects the burner 42' to the second stage turbine 46'. A bypass conduit 66 is provided for routing a portion of the gases from the clean-up device 36 to the burner 42 as in the previous embodiment.

Thus, according to the embodiment of Fig. 2 the gases from the first-stage turbine 46 pass through the conduit 62, the burner 42', the conduit 64 and into the second-stage turbine 46', and the spent gases from the latter pass via the conduit 50, to the waste heat boiler 52. Otherwise the operation and function of the embodiment of the Fig. 2 is identical to that of Fig. 1.

It is understood that the fluidized bed boiler 10 can be of a "bubbling" type or a "fast" type. In the bubbling type a bed of particulate materials is supported by an air distribution plate, to which combustion-supporting air is introduced through a plurality of perforations in the plate, causing the material to expand and take on a suspended, or fluidized, state. The gas velocity is typically two to three times that needed to develop a pressure drop which will support the bed weight (e.g., minimum fluidization velocity), causing the formation of bubbles that rise up through the bed and give it the appearance of a boiling liquid. The bed exhibits a well-defined upper surface. When provided with high solids recycle, the bubbling bed can build up its fines content and operate as a circulating fluidized bed.

In a "fast" fluidized bed the mean gas velocity, as a fraction of the minimum fluidizing velocity, is increased above that for the bubbling bed, so that the bed surface becomes more diffused and the solids entrainment from the bed is increased. According to this process, fluidized bed densities between 5 and 20% volume of solids are attained which is well below the 30% volume of solids typical of the bubbling fluidized bed. The formation of the low density fast fluidized bed is due to its small particle size and to a high solids throughput, which require high solids recycle. The velocity range of a fast fluidized bed is between the solids terminal, or free fall, velocity and a velocity beyond which the bed would be converted into a pneumatic transport line.

The high solids circulation required by any circulating fluidized bed makes it insensitive to fuel heat release patterns, thus minimizing the variation of the temperature within the stream generator, and therefore decreasing the nitrogen oxides formation. Also, the high solids loading improves the efficiency of the mechanical device used to separate the gas from the solids for solids recycle. The resulting increase in sulphur adsorbent and fuel residence times reduces the adsorbent and fuel consumption.

Several advantages result from the methods of the present invention. For example, a fluidized bed boiler, with the inherent advantages discussed above is utilized and is operated at the optimum temperature of 1600°F while eliminating the need for utilizing a separate gasifier to raise the temperature of the gases to the requisite temperature required by the turbine. This is achieved by generating a combustible off-gas in the lower portion of the boiler and utilizing this gas to raise the temperature of the flue gases exiting from the boiler. Thus, a relatively efficient operation is achieved.

## Claims

1. A method of operating a gas turbine assembly (46) comprising passing air through a bed (12) of particulate material including fuel disposed in a vessel (10), the velocity of the air being sufficient to fluidize the particulate material and promote the combustion fuel in the bed, but insufficient for complete combustion of the fuel whereby a combustible off-gas is generated containing entrained particulate material from the bed ; and adding additional air (14a) to the vessel at a location above the fluidized bed (12) to complete combustion of the fuel and generate a flue gas with entrained particulate material which is discharged through an outlet (18) from the vessel (10) CHARACTERISED IN THAT a portion of the off-gas is discharged through an outlet (22) from the vessel located upstream of the location where said additional air (14a) is added, entrained particulate material is separated from the flue gases and from the off-gas, and the flue gases and at least some of the off-gas are then burnt together to generate high temperature gases which are passed to the turbine assembly (46).

2. A method according to Claim 1 CHARACTERISED IN THAT the flue gases and at least some of the off-gas are burnt together in a single burner assembly (42).

3. A method according to Claim 2 CHARACTERISED IN THAT a portion of the off-gas is burnt in a separate burner assembly (42').

4. A method according to Claim 3 CHARACTERISED IN THAT the gases from burner assemblies (42, 42') are respectively passed to a first stage (46) and a second stage (46') turbine.

5. A method according to any preceding Claim including the step of exchanging heat between the spent gases from turbine assembly (46, 46') and feedwater to heat the feedwater, and passing the heated feedwater to combustion vessel (10) to generate steam therefrom.

## Patentansprüche

1. Verfahren zum Betreiben einer Gasturbinenanordnung (46), umfassend die Leitung von Luft durch ein Bett (12) aus aus Partikeln bestehendem Material, das in einem Behälter (10) angeordneten Brennstoff enthält, wobei die Geschwindigkeit der Luft dazu ausreicht, das aus Partikeln bestehende Material zu fluidisieren und die Brennstoffverbrennung im Bett zu fördern, jedoch nicht für eine vollständige Verbrennung des Brennstoffs ausreicht, wodurch ein brennbares Abgas erzeugt wird, das aus dem Bett mitgerissenes, aus Partikeln bestehendes Material enthält ; und den Zusatz von Zusatzluft (14a) in den Behälter an einer Stelle oberhalb des fluidisierten betts (12), um die Verbrennung des Brennstoffs zu vervollständigen und ein Rauchgas mit mitgerissenem, aus Partikeln bestehendem Material zu erzeugen, das durch einen Auslaß (18) aus dem Behälter (10) ausgetragen wird, **dadurch gekennzeichnet,** daß ein Teil des Abgases durch einen bezüglich der Stelle, an der die Zusatzluft (14a) zugesetzt wird, stromaufwärts gelegenen Auslaß (22) vom Behälter ausgetragen wird, daß mitgerissenes, aus Partikeln bestehendes Material von den Rauchgasen und vom Abgas getrennt wird und daß die Rauchgase und zumindest etwas vom Abgas dann zusammen verbrannt werden, um Hochtemperaturgase zu erzeugen, die durch die Turbinenanordnung (46) geleitet werden.

2. Verfahren nach Anspruch 1, **dadurch gekennzeichnet,** daß die Rauchgase und zumindest etwas vom Abgas in einer einzigen Brenneranordnung (42) zusammen verbrannt werden.

3. Verfahren nach Anspruch 2, **dadurch gekennzeichnet,** daß ein Teil des Abgases in einer separaten Brenneranordung (42') verbrannt wird.

4. Verfahren nach Anspruch 3, **dadurch gekennzeichnet,** daß die Gase von den Brenneranordnungen (42, 42') zu einer Turbine einer ersten Stufe (46) bzw. einer Turbine einer zweiten Stufe (46') geleitet werden.

5. Verfahren nach einem vorhergehenden Anspruch, einschließend den Schritt eines Wärmeaustauschs zwischen den Abgasen aus der Turbinenanordnung (46, 46') und Speisewasser, um das Speisewasser zu erwärmen, und der Leitung des erwärmten Speisewassers in den Verbrennungsbehalter (10), um hieraus Dampf zu erzeugen.

## Revendications

1. Procédé pour actionner un ensemble formant turbine à gaz (46), consistant à faire passer de l'air à travers un lit (12) de matières particulaires contenant un combustible, disposé dans un récipient (10), la vitesse de l'air étant suffisante pour fluidiser les matières particulaires et amorcer la combustion du combustible contenu dans le lit, mais insuffisante pour achever la combustion du combustible, afin de produire ainsi un gaz d'échappement combustible contenant des matières particulaires entraînées à partir du lit ; et à ajouter de l'air supplémentaire (14a) dans le récipient au niveau d'un emplacement situé au-dessus du lit fluidisé (12) pour achever la combustion du combustible et produire un gaz de combustion contenant des matières particulaires entraînées, gaz de combustion qui est évacué du récipient (10) à travers un orifice de sortie (18) CARACTERISE EN CE QU'une partie du gaz d'échappement est évacuée du récipient à travers un orifice de sortie (22) situé en amont de l'emplacement où ledit air supplémentaire (14a) est ajouté, les matières particulaires entraînées étant séparées des gaz de combustion et du gaz d'échappement, tandis que les gaz de combustion et une certaine quantité au moins du gaz d'échappement sont ensuite brûlés conjointement pour produire des gaz à haute température qui sont transmis à l'ensemble formant turbine (46).

2. Procédé selon la revendication 1, CARACTERISE EN CE QUE les gaz de combustion et une certaine quantité au moins du gaz d'échappement sont brûlés conjointement dans un ensemble formant brûleur unique (42).

3. Procédé selon la revendication 2, CARACTERISE EN CE QU'une partie du gaz d'échappement est brûlée dans un ensemble formant brûleur séparé (42').

4. Procédé selon la revendication 3, CARACTERISE EN CE QUE les gaz provenant des ensembles formant brûleurs (42, 42') sont respectivement transmis à une turbine comportant un premier étage (46) et un second étage (46').

5. Procédé selon l'une quelconque des revendications précédentes, comportant l'étape qui consiste à réaliser un échange de chaleur entre les gaz utilisés provenant de l'ensemble formant turbine (46, 46') et de l'eau d'alimentation pour chauffer l'eau d'alimentation, et à transmettre l'eau d'alimentation chauffée au récipient de combustion (10) afin de produire de la vapeur à partir de celle-ci.

**FIG. 1**

**FIG. 2**